# FASCICULE DE BREVET EUROPEEN

(11) **EP 1 010 045 B1**
(45) Date de publication et mention de la délivrance du brevet: **02.01.2002**
(21) Numéro de dépôt: 98921571.0
(22) Date de dépôt: 20.04.1998
(51) Int. Cl.: G05B 19/4065

(54) **PROCEDE DE TRANSMISSION DES INFORMATIONS DE CONTROLE DE BRIS D'OUTIL ET DISPOSITIF PERMETTANT DE LE METTRE EN OEUVRE**
VERFAHREN ZUM ÜBERTRAGEN VON KONTROLLINFORMATIONEN ÜBER WERKZEUGBRUCH SOWIE VORRICHTUNG ZUR DURCHFÜHRUNG DIESES VERFAHRENS
METHOD FOR TRANSMITTING DATA CONCERNING TOOL BREAKAGE AND DEVICE FOR IMPLEMENTING SAME

(30) Priorité: 18.04.1997 FR 9704998
(43) Date de publication de la demande: 21.06.2000
(73) Titulaire: Renault Automation Comau, 92365 Meudon La Forêt Cedex (FR)
(72) Inventeur: MENCHI, Gérald, F-81100 Castres (FR)
(74) Mandataire: Richebourg, Michel François
(86) Numéro de dépôt international: FR9800794
(87) Numéro de publication internationale: WO9848327

(56) Documents cités:
- DE-C- 4 229 569
- CSELLE T ET AL: "SCHNITTKRAFTMESSUNGEN AM ROTIERENDEN WERKZEUG" ZWF ZEITSCHRIFT FUR WIRTSCHAFTLICHE FERTIGUNG UND AUTOMATISIERUNG, vol. 88, no. 7 / 08, 1 juillet 1993, MÜNCHEN, pages S77-S78, S80, XP000383969 cité dans la demande
- SPUR G ET AL: "ZERSPANKRAFTMESSUNG BEI DER FUNFACHSIGEN FRASBEARBEITUNG" ZWF ZEITSCHRIFT FUR WIRTSCHAFTLICHE FERTIGUNG UND AUTOMATISIERUNG, vol. 88, no. 9, 1 septembre 1993, pages 419-422, XP000396535
- FLEDMANN K ET AL: "MULTISENSORIELLES MIKROSYSTEMZUR WERKZEUGUBERWACHUNG BEIM DREHEN" VDI Z, vol. 137, no. 4, SPEZIAL, 1 septembre 1995, pages 52-54, XP000542663
- PATENT ABSTRACTS OF JAPAN vol. 012, no. 001 (M-656), 6 janvier 1988 & JP 62 166948 A (TAKAAKI NAGAO;OTHERS: 01), 23 juillet 1987,
- PATENT ABSTRACTS OF JAPAN vol. 013, no. 025 (M-787), 20 janvier 1989 & JP 63 237846 A (OMRON TATEISI ELECTRONICS CO), 4 octobre 1988,

## Description

La présente invention a trait au domaine du contrôle du bris d'outil et notamment aux adaptations permettant d'assurer dans les meilleures conditions la transmission de données entre les capteurs de contrôle et l'unité centrale.

En effet, l'évolution des machines-outils les amène à devenir de plus en plus rapides et à augmenter leur rendement. Une chaîne d'usinage n'est, en fait, rentable que lorsqu'elle est capable de fonctionner en continu et sans interruption. Il est donc très important de repérer, le plus. rapidement possible, la casse d'un outil ou son usure prématurée avant que les pièces ne soient évacuées sans avoir été correctement usinées par ledit outil ou, du moins, de limiter le nombre de pièces défectueuses du fait de l'absence ou de la mauvaise qualité d'un usinage sur celles-ci.

Il existe dans l'art antérieur plusieurs dispositifs ou capteurs permettant de détecter l'usure prématurée ou la casse d'un outil, mais tel n'est pas l'objet de l'invention qui se situe en fait dans la transmission des données entre lesdits capteurs et l'unité centrale commandant l'arrêt de la machine-outil afin que l'opération de remplacement de l'outil défectueux puisse être réalisée.

De tels dispositifs de détection trouvent toute leur utilité dans la détection de l'usure prématurée ou de la casse d'un outil se trouvant sur une cassette d'usinage comportant une pluralité de têtes d'usinage dont l'usure ou la casse est difficilement détectable.

L'art antérieur décrit des dispositifs de transmission qui permettent le dialogue plus ou moins correct entre une unité centrale et une série de capteurs placés, soit directement dans le mandrin contenant l'outil, soit dans les orifices d'un cache accueillant les extrémités des outils et repérant la présence de celles-ci. Ces dispositifs assurent la transmission des signaux au moyen d'un émetteur utilisant des ondes radio. Un détecteur de bris d'outil envoie un signal lorsque l'outil qu'il surveille présente un défaut, ce qui correspond à un système "Tout Ou Rien" : soit il n'y a pas de défaut et donc pas d'émission de signal, soit il y a défaut et donc émission du signal qui est détecté par l'unité centrale qui bloque la machine. Cette technologie rudimentaire est peu fiable dans ce domaine d'application, et cela pour plusieurs raisons :
- du fait de la présence de parasites créés par les mouvements des organes mobiles ainsi que par les champs électriques et électromagnétiques des organes moteurs;
- du fait que les postes d'usinages soient isolés du reste de la machine-outil par des cabines et des parois étanches afin d'éviter la projection de déchets autour de celle-ci;
- du fait de la projection de liquides de refroidissement ou d'évacuation des déchets sur l'outil ou les outils;
- du fait que les outils soient séparés de l'arrière de la machine outil par son carter ainsi que par d'autres parois métalliques;
- du fait que l'émission d'une onde radio à l'intérieur d'un corps creux a un effet de "cage de Faraday".....

D'autre part, la présence de plusieurs têtes d'outils et de plusieurs machines-outils côte à côte brouille les transmissions ce qui peut entraîner l'arrêt d'une machine pour la détection d'un défaut d'outil sur un outil qui ne lui est pas destiné.

Les plages de fréquences utilisables étant différentes pour chaque pays, il est nécessaire de réaliser un réglage spécifique du dispositif de transmission pour chacun.

Les dispositifs décrits et notamment les dispositifs comprenant une batterie, incorporent un dispositif de détection de charge de la batterie. Il est bien évidemment impossible de contrôler la charge de la batterie lorsque celle-ci est vide et donc incapable d'émettre un signal d'alarme de non fonctionnement.

Les fabricants de ces dispositifs de transmission ont essayé de pallier aux problèmes précités en dotant les émetteurs ainsi que les récepteurs, d'antennes censées faciliter la transmission. Ces antennes n'ont amélioré qu'en partie la transmission tout en nécessitant des réglages de plus en plus précis à des fins de positionnement et de polarisation de celles-ci. D'autre part, lorsque la sensibilité du récepteur est augmentée pour faciliter la réception du signal, le récepteur devient dans le même temps très sensible aux parasites créés par les pièces en mouvement et par les organes mobiles internes à la machine-outil.

Il existe également classiquement des procédés de transmission tel que celui décrit par l'article intitulé "Schnittkraftmessungen am rotierenden Werkzeug" rédigé par CSELLE et STIRNIMANN dans la revue allemande "ZWF ZEITSCHRIFT FUR WIRTSCHAFTLICHE" qui, à partir d'un capteur analogique propose une transmission des données par télémétrie par modulation d'impulsions codées en fonction de l'information. Cette solution technologique est particulièrement avantageuse mais n'est ici applicable parce que l'information à transmettre est analogique et donc ne se répète pas. Ce qui est une application différente de celle de l'invention dont le but est de transmettre une information de telle façon à ce que celle-ci soit immédiatement identifiable.

Partant de cet état de fait, la demanderesse a donc mené des recherches visant à améliorer la transmission entre les capteurs de détection de bris d'outil et l'unité centrale commandant l'arrêt de la machine. Ces recherches ont abouti à un nouveau procédé de transmission des signaux de contrôle de détection de bris d'outil et au dispositif permettant de le mettre en oeuvre obviant aux inconvénients précités tout en proposant une solution facile à mettre en oeuvre, de grande fiabilité et d'un coût moins prohibitif que celui des dispositifs décrits dans l'art antérieur.

Selon la caractéristique principale de l'invention, le procédé de transmission des signaux de contrôle de détection des bris d'outils d'une machine-outil du type de celle comprenant un module émetteur de détection de bris d'outil et un module récepteur de commande assurant l'arrêt de la machine, est remarquable en ce qu'il consiste à coder le signal envoyé par le susdit module émetteur de détection.

Ainsi, le signal a beaucoup moins de chance d'être brouillé par les parasites créés par les différents mouvements des organes internes. De plus, l'opération de codage permet d'augmenter au maximum la sensibilité du récepteur afin de faciliter la transmission à travers tous les obstacles que peut rencontrer une onde radio dans un atelier d'usinage.

Cette caractéristique se démarque des dispositifs de l'art antérieur en ce que le contrôle de bris d'outil peut être considéré comme une information logique, c'est à dire qu'un capteur détecte un bris d'outil (ou une usure prématurée de l'outil) et donc émet un signal de bris d'outil ou ne le détecte pas et donc n'émet pas. En conséquence, hors procédure quotidienne de contrôle du fonctionnement du capteur, un dispositif de contrôle de bris d'outil n'émet classiquement que lorsque un bris d'outil est détecté. C'est la détection d'un bris d'outil qui déclenche l'émission d'un message codé, le codage servant non à la reproduction des différentes variations du signal détecté mais pour l'identification du message émis.

Selon une première solution déjà très avantageuse, le procédé de transmission est remarquable en ce qu'il consiste à émettre un nombre déterminé de signaux identiques pour signaler le bris d'outil et à déclencher l'arrêt de la machine seulement lorsque le module récepteur de commande reçoit ce nombre déterminé de signaux identiques. Cette première solution de codage permet de créer un message très difficilement imitable par une onde parasite et donne donc la possibilité d'augmenter la sensibilité du récepteur avec moins de risque de voir la machine suivre un fonctionnement aléatoire déterminé par les parasites et les interférences.

Selon une deuxième solution particulièrement avantageuse, le procédé de transmission est remarquable en ce qu'il consiste à émettre sur une fréquence donnée une série de signaux différents constituant un mot binaire apte à être interprété par le module récepteur de commande. Cette deuxième solution donne la possibilité de créer une liste d'adresses et de codes pour chaque outil et autorise ainsi le repérage et la localisation de tout outil hors service ou présentant un défaut. Une transmission des données par ondes radio codées ouvre un grand champ de possibilités d'application dans la transmission et le dialogue entre les détecteurs de bris d'outil et l'unité centrale ou module récepteur de commande de la machine-outil. En effet, un codage numérique est sécurisant car il propose un procédé beaucoup plus fiable que les systèmes "Tout Ou Rien" grâce à sa quasi-immunité aux parasites. Son temps de réponse et la rapidité de transmission des informations sont grandement améliorés dès lors que le message est de suite reconnu et authentifié car le codage permet non seulement le repérage de l'origine du message mais aussi la différenciation sans ambiguïté des messages entre eux.

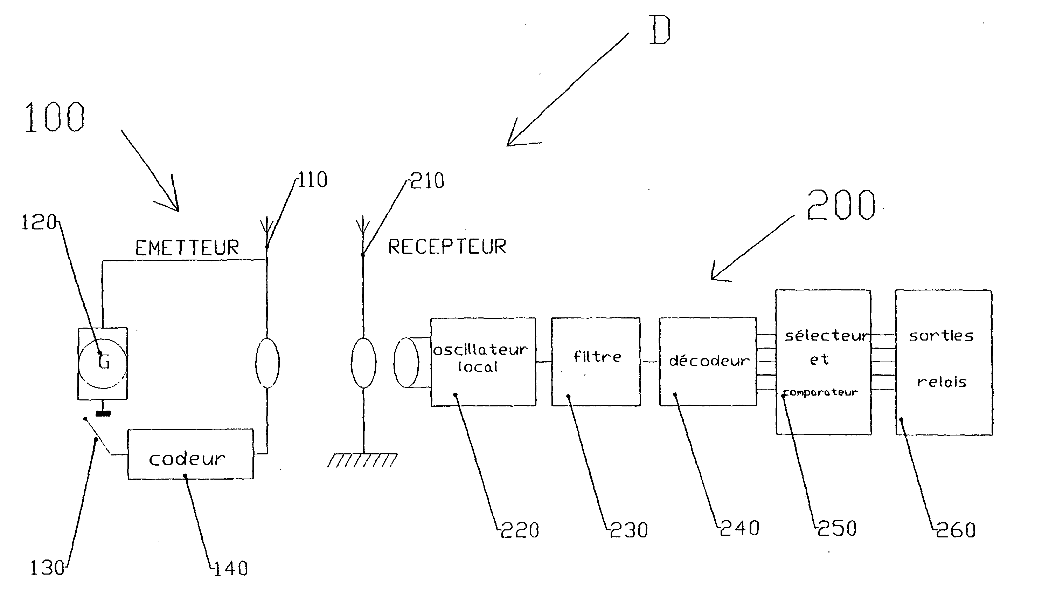

Les concepts fondamentaux de l'invention venant d'être exposés ci-dessus dans leur forme la plus élémentaire, d'autres détails et d'autres caractéristiques ressortiront plus clairement à la lecture de la description qui suit donnant à titre d'exemple non limitatif et en regard des dessins annexés, un mode de réalisation d'un dispositif de transmission des signaux de contrôle conforme à l'invention. Cette description se réfère au dessin annexé sur lequel est représenté le schéma de principe d'un émetteur et d'un récepteur d'un dispositif de transmission respectant le concept fondamental de l'invention,

Tel qu'illustré sur cette figure unique, le dispositif de transmission référencé dans son ensemble D se compose d'un module émetteur de détection 100 et d'un module récepteur de commande 200.

Selon un premier mode d'application de l'invention, le module émetteur de détection 100 est intégré dans un masque servant soit à localiser par contact, un mauvais usinage, une profondeur non suffisante et donc, une tête multiple défectueuse, c'est à dire une tête multiple comportant un outil défectueux, soit à contrôler la bonne réalisation de l'usinage d'un outil monobroche, le module émetteur de détection 100 étant bien évidemment unique pour chaque masque.

Un deuxième mode d'application se définit par le fait que les têtes d'outils de chaque cassette d'usinage ont chacune leur module émetteur de détection 100 ou capteur sans contact relié au module, ce qui a pour avantage de situer plus précisément la panne ou la cause de l'arrêt du fait que le capteur pourra lui-même caractériser le mot binaire de façon à ce que le module récepteur de commande puisse en déterminer la source.

Selon un mode de réalisation particulièrement avantageux de l'invention, le module émetteur de détection 100 comporte un capteur 130 sans contact à effet de hall à champ magnétique pour la détection du bris d'outil et le déclenchement du codeur relié à celui-ci; solution particulièrement judicieuse puisque les outils pourront être contrôlés pendant leur rotation. De plus, cette technologie de détection n'est pas sensible aux projections d'eau ou de copeaux.

Selon un autre mode de réalisation particulièrement judicieux de l'invention, le module émetteur de détection 100 comporte un capteur 130 à contact magnétique de type ILS, solution particulièrement judicieuse en ce que ce dernier ne nécessite pas une alimentation en courant permanente, ce qui permet d'économiser le générateur ou la batterie du dispositif de transmission de l'invention.

Selon un mode de réalisation préférée de l'invention, le module émetteur de détection 100 comporte une antenne 110, un générateur ou un accumulateur d'énergie 120, un capteur 130 ainsi qu'un codeur 140. Dans le mode d'application où le capteur se trouve être à contact intégré dans un masque de contrôle, le fonctionnement du module de détection et d'émission est le suivant.

Lorsque le masque est introduit dans la pièce à usiner, si l'alésage, le taraudage ou le lamage venant d'être réalisé, présente un défaut, le capteur est actionné et le contact est établi entre le générateur 120 et le codeur 140 afin que ce dernier puisse émettre par l'intermédiaire de l'antenne 110 un mot binaire codé correspondant.

Lorsque le module émetteur de détection 100 appartient à un outil intégré dans une cassette d'outil à tête multiple, la détection n'est pas réalisée par contact mais par variation des champs magnétiques.

Selon une caractéristique particulièrement avantageuse de l'invention, le mot binaire émis par chaque module émetteur de détection 100 comprend un nombre déterminé d'unités d'information dont au moins une partie est affectée au repérage de la machine et au moins une autre au repérage de l'outil et de la tête multiple sur laquelle il est monté. Aussi, lorsque la défaillance ou le bris d'un outil est détecté par le capteur 130, le module émetteur de détection 100 émet un mot binaire qui, par un mode de réalisation préférée de l'invention, est de douze unités d'information dont une partie est affectée au repérage de la machine et une autre au repérage de l'outil et de la tête multiple sur lequel il est monté. Ce mode de réalisation est particulièrement avantageux car le codage permet non seulement d'augmenter la sensibilité de réception sans risque de dysfonctionnement par réception d'une onde parasite mais aussi de permettre le repérage de toutes les têtes d'outils.

Selon un mode de réalisation de l'invention, le susdit module récepteur de commande 200 comporte une antenne de réception 210, laquelle se trouve liée à un oscillateur local 220 qui traduit l'onde radio en signaux électriques. Avant d'être décodés, ces signaux électriques passent au travers d'un filtre électronique 230 qui assure l'élimination des signaux électriques créés par des ondes parasites et les interférences.

Selon une caractéristique particulièrement avantageuse de l'invention, le module récepteur de commande 200 comporte un dispositif de décodage 240 recevant le mot binaire codé par le dispositif émetteur de détection 100 déclenché par la détection du bris d'outil.

Selon une autre caractéristique particulièrement avantageuse de l'invention, le module récepteur de commande 200 de la machine-outil recevant les signaux comporte une mémoire 250 dans laquelle sont stockés tous les codes correspondant à chacun des outils travaillant sur ladite machine afin de les comparer aux mots binaires décodés reçus et de repérer ainsi l'outil défectueux. Ainsi, le mot binaire décodé peut être comparé aux mots déjà stockés. Cette comparaison permet également de repérer l'outil ou la cassette d'outil défectueuse ainsi que la machine-outil à laquelle il est intégré à des fins d'arrêt de celle-ci en envoyant les messages adéquats aux différentes sorties et relais 260 du module récepteur de commande 200. En effet, le mot binaire étant préférentiellement établi à partir de douze unités d'information (bits), ce dernier peut contenir une suite de codes reconnaissables et comparables à des codes stockés en mémoire non seulement pour repérer la cassette d'outils défectueuse dans le cas d'une détection par masque mais aussi la tête d'outil défectueuse dans le cas où à chaque tête d'outil est intégré un module émetteur de détection.

Selon une caractéristique technique particulièrement avantageuse de l'invention qui permet de mettre en oeuvre le dispositif de l'invention dans des conditions optimales, les horloges internes des codeurs 140 et du décodeur 240 appartenant respectivement au module émetteur de détection 100, et au module récepteur de commande 200 sont synchronisées afin d'assurer une transmission optimale.

Afin de pallier au manque de fiabilité des dispositifs de contrôle de l'état de la batterie de l'émetteur existant dans l'art antérieur, un test de liaison entre le ou les modules émetteurs de détection 100 et le module récepteur de commande 200 est réalisé régulièrement suivant un intervalle de temps prédéterminé. Selon un mode de réalisation non limitatif, cet intervalle est fixé à quatre heures. Ainsi, toutes les quatre heures un message de bon fonctionnement est envoyé par tous les modules émetteurs de détection 100 au module récepteur de commande 200 afin de déterminer l'état de fonctionnement de chacun, le non envoi du message devenant le signal de dysfonctionnement du module émetteur de détection 100.

Toujours pour pallier au problème du manque d'autonomie des batteries, un autre mode de réalisation du dispositif de l'invention propose, au moyen de composants ayant une très faible consommation, une détection d'un seuil minimum de puissance électrique de la batterie ou du générateur, seuil minimum permettant néanmoins au dispositif D d'émission d'émettre un message de défaut batterie pendant très longtemps suivant un intervalle de temps régulier, par exemple toutes les quatre-vingt dix secondes permettant ainsi de transmettre ce message d'erreur après une longue période de non fonctionnement de la machine. Ainsi, une des caractéristiques du dispositif de l'invention est que lorsque le dispositif est du type de celui où le module émetteur de détection comporte un générateur ou un accumulateur d'alimentation en courant électrique, ledit codeur électronique se déclenche lors de la détection d'un seuil de courant minimum dans le susdit générateur.

Cette caractéristique a pour avantage de proposer un auto-contrôle de la capacité des modules émetteurs de détection.

Une autre caractéristique particulièrement avantageuse liée à cette dernière est qu'une partie dudit nombre d'unités d'information composant le mot binaire transmis, est affectée à l'identification de la cause de l'émission. C'est à dire que si la cause d'émission est un bris d'outil la ou les unités d'informations affectées à cette tâche présenteront un code correspondant au bris d'outil ou si la cause d'émission est un seuil minimal de générateur franchi, la ou les unités d'informations affectées à cette tâche présenteront un code correspondant à un seuil minimum de générateur.

Un mode de fonctionnement dudit dispositif de transmission D consiste en une mise en veille automatique du dispositif émetteur de détection à des fins d'économie d'énergie.

Un autre mode de fonctionnement dudit dispositif de transmission D consiste à garder en mémoire le défaut détecté et émettre en conséquence jusqu'à ce que ce dernier soit résolu et sans tenir compte de la mise en veille ou de l'arrêt de la machine.

Selon un mode préféré de réalisation non limitatif, le dispositif D d'émission et de réception utilise des modules à résonateur à onde de surface qui travaillent à fréquence élevée donc en ondes très courtes avec une possibilité de transmission allant jusqu'à 20 000 bauds. Le module émetteur de détection 100 possède ici, selon un exemple non limitatif, une modulation de type FM et FSK pour une meilleure fiabilité dans la transmission, avec un signal numérique délivré par le codeur 140 travaillant sur douze unités d'information (bits).

Bien évidemment, le dispositif D gérera l'émission simultanée de signaux de détection afin d'éviter toute collision des codes et donc un mauvais fonctionnement.

On comprend que le dispositif de transmission des signaux de contrôle de détection de bris d'outil qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention pris dans ses aspects et dans son esprit les plus larges.

Ainsi, par exemple, le dispositif de transmission peut être adapté et son procédé appliqué dans plusieurs autres applications parmi lesquelles les principales sont :
- le suivi d'un organe mobile comme une palette porte-pièce dans une machine transfert,
- la transmission de l'information de la situation des brides sur un montage porte-pièce,
- la traçabilité d'un élément mobile pour retrouver son parcours,
- le décodage et reconnaissance d'un élément mobile,
- le dispositif anti-collision,
- le dialogue entre automates ou entre des parties commande,
- l'interfaçage avec un capteur intelligent,
- etc.....

## Revendications

1. Procédé de transmission par ondes radio des informations de contrôle de bris d'outil d'une machine-outil du type de celle comprenant au moins un module émetteur de détection (100) émettant des signaux et un module récepteur de commande (200) apte à recevoir ces signaux, **CARACTERISE EN CE QU'**il consiste à coder le signal envoyé par le susdit module émetteur de détection (100)lors de la détection d'un bris d'outil.

2. Procédé de transmission selon la revendication 1, **CARACTERISE EN CE QU'**il consiste à émettre un nombre déterminé de signaux identiques pour signaler le bris d'outil et à déclencher l'arrêt de la machine seulement lorsque le module récepteur de commande (200) reçoit ce nombre déterminé de signaux identiques.

3. Procédé de transmission selon la revendication 1, **CARACTERISE EN CE QU'**il consiste à émettre sur une fréquence donnée, lors de la détection d'un bris d'outil, une série de signaux différents constituant un mot binaire apte à être interprété par le module récepteur de commande (200).

4. Dispositif permettant de mettre en oeuvre le procédé de transmission selon les revendications 1 à 3, par ondes radio de signaux de contrôle de détection de bris d'outil d'une machine-outil du type de celui comprenant au moins un module émetteur de détection (100) émettant des signaux et un module récepteur de commande (200) apte à recevoir ces signaux, **CARACTERISE PAR LE FAIT QUE** le module émetteur de détection (100) comporte un codeur électronique (140) déclenchable lors de la détection d'un bris d'outil.

5. Dispositif de transmission selon la revendication 4, **CARACTERISE PAR LE FAIT QUE** le module récepteur de commande (200) comporte un dispositif de décodage (240) destiné à recevoir un mot binaire codé par le susdit module émetteur de détection (100) déclenché par la détection du bris d'outil.

6. Dispositif de transmission selon la revendication 4, du type de celui dans lequel le module émetteur de détection comporte un générateur ou un accumulateur d'alimentation en courant électrique, **CARACTERISE PAR LE FAIT QUE** ledit codeur électronique (140) se déclenche lors de la détection d'un seuil de courant minimum dans le susdit générateur.

7. Dispositif de transmission selon la revendication 4, **CARACTERISE PAR LE FAIT QU'**un test de liaison entre le ou les susdits modules émetteurs de détection (100) et récepteur de commande (200) est réalisé suivant un intervalle de temps prédéterminé.

8. Dispositif de transmission selon la revendication 4, **CARACTERISE PAR LE FAIT QUE** chaque module émetteur de détection (100) comporte un capteur (130) sans contact à effet de hall à champ magnétique pour la détection du bris d'outil et le déclenchement du codeur relié à celui-ci.

9. Dispositif de transmission selon la revendication 4, **CARACTERISE PAR LE FAIT QUE** le module émetteur de détection (100) comporte un capteur (130) à contact magnétique de type ILS pour la détection du bris d'outil et le déclenchement du codeur relié à celui-ci.

10. Dispositif de transmission selon la revendication 5, **CARACTERISE PAR LE FAIT QUE** le mot binaire émis par chaque module émetteur de détection (100) comprend un nombre déterminé d'unités d'information dont au moins une partie est affectée au repérage de la machine et au moins une autre partie au repérage de l'outil et de la tête multiple sur laquelle il est monté.

11. Dispositif de transmission selon la revendication 5, **CARACTERISE PAR LE FAIT QUE** les horloges internes des codeurs (140) et décodeurs (240) binaires des susdits modules émetteurs (100) et récepteurs (200) sont synchronisées l'une par rapport à l'autre.

12. Dispositif de transmission selon les revendications 6 et 10, **CARACTERISE PAR LE FAIT QU'**une partie dudit nombre d'unités d'information composant le mot binaire transmis, est affectée à l'identification de la cause de l'émission.

13. Dispositif de transmission selon la revendication 10, **CARACTERISE PAR LE FAIT QUE** le susdit module récepteur de commande (200) de la machine-outil comporte une mémoire (250) dans laquelle sont stockés tous les codes correspondant à chacun des outils travaillant sur ladite machine afin de les comparer aux mots binaires décodés reçus des susdits modules émetteurs de détection (100) et repérer ainsi l'outil ou le générateur défectueux.

## Claims

1. Method for transmitting by air waves inspection data of tool breakage of a machine tool of the type that comprises at least one detection emitting module (100) emitting signals and a control receiving module (200) capable of receiving said signals, wherein it consists in coding the signal sent by the aforementioned detection emitting module (100) when a tool breakage is detected.

2. Transmission method according to claim 1, wherein it consists in emitting a determined number of identical signals in order to signal the tool breakage and to trigger the stopping of the machine only when the control receiving module (200) receives said determined number of identical signals.

3. Transmission method according to claim 1, wherein it consists in emitting on a given frequency, when a tool breakage is detected, a series of different signals constituting a binary word capable of being interpreted by the control receiving module (200).

4. Device allowing the implementation of the transmission method according to claims 1 to 3, by radio waves of inspection signals of detection of tool breakage of a machine tool of the type that comprises at least one detection emitting module (100) emitting signals and a control receiving module (200) capable of receiving such signals, wherein the detection emitting module (100) is provided with an electronic encoder (140) which can be triggered when a tool breakage is detected.

5. Transmission device according to claim 4, wherein the control receiving module (200) is provided with a decoding device (240) intended to receive a binary word coded by the aforementioned detection emitting module (100) triggered by the detection of the tool breakage.

6. Transmission device according to claim 4, of the type in which the detection emitting device is provided with a power generator or accumulator, wherein said electronic encoder (140) is triggered when it detects a threshold of minimum current in the aforementioned generator.

7. Transmission device according to claim 4, wherein a connection test between the aforementioned detection emitting module(s) (100) and the control receiving module (200) is made following a predetermined time period.

8. Transmission device according to claim 4, wherein each detection emitting module (100) is provided with a magnetic field - Hall effect sensor (130) without contact for the detection of the tool breakage and the triggering of the encoder linked to said tool.

9. Transmission device according to claim 4, wherein the detection emitting device (100) is provided with a sensor (130) with magnetic contact of the ILS type for the detection of the tool breakage and the triggering of the encoder linked to said tool.

10. Transmission device according to claim 5, wherein the binary word emitted by each detection emitting module (100) comprises a determined number of data units, of which at least a part is affected to the localisation of the machine and at least the other part is affected to the localisation of the tool and the multiple head on which it is mounted.

11. Transmission device according to claim 5, wherein the internal clocks of the binary encoders (140) and of the binary decoders (240) of the aforementioned emitting modules (100) and receiving modules (200) are synchronised with respect to each other.

12. Transmission device according to claims 6 and 10, wherein one portion of said number of data units comprising the transmitted binary word is affected to the identification of the cause of the emission.

13. Transmission device according to claim 10, wherein the aforementioned control receiving modules (200) of the machine tool is provided with a memory (250) in which are stored all the codes corresponding to each of the tools used on said machine in order to compare them to the decoded binary words received from the aforementioned detection emitting modules (100) and thus localise the faulty tool or generator.

## Patentansprüche

1. Verfahren zur Übertragung von Informationen mittels Funkwellen zur Überwachung von Werkzeugbrüchen in einer Werkzeugmaschine, umfassend mindestens ein Sendemodul zur Erkennung (100), das Signale aussendet, und ein Empfangsmodul zur Steuerung (200), das diese Signale empfangen kann, **dadurch gekennzeichnet, dass** es darin besteht, das von dem obengenannten Sendemodul zur Erkennung (100) bei der Erkennung eines Werkzeugbruchs ausgesendete Signal zu codieren.

2. Übertragungsverfahren nach Anspruch 1, **dadurch gekennzeichnet, dass** es darin besteht, eine bestimmte Anzahl identischer Signale auszusenden, um den Werkzeugbruch anzuzeigen, und den Stillstand der Maschine nur dann auszulösen, wenn das Empfangsmodul zur Steuerung (200) diese bestimmte Anzahl identischer Signale empfängt.

3. Übertragungsverfahren nach Anspruch 1, **dadurch gekennzeichnet, dass** es darin besteht, auf einer gegebenen Frequenz bei der Erkennung eines Werkzeugbruchs eine Serie verschiedener Signale auszusenden, die ein binäres Wort bilden, das vom Empfangsmodul zur Steuerung (200) interpretiert werden kann.

4. Vorrichtung zum Einsatz des Verfahrens nach den Ansprüchen 1 bis 3 zur Übertragung von Kontrollsignalen mittels Funkwellen zur Erkennung von Werkzeugbrüchen in einer Werkzeugmaschine, umfassend mindestens ein Sendemodul zur Erkennung (100), das Signale aussendet, und ein Empfangsmodul zur Steuerung (200), das diese Signale empfangen kann, **dadurch gekennzeichnet, dass** das Sendemodul zur Erkennung (100) einen elektronischen Codierer (140) umfasst, der bei der Erkennung eines Werkzeugbruchs aktiviert werden kann.

5. Übertragungsvorrichtung nach Anspruch 4, **dadurch gekennzeichnet, dass** das Empfangsmodul zur Steuerung (200) eine Decodiervorrichtung (240) umfasst, die dazu dient, ein binäres Wort zu empfangen, das von dem obengenannten Sendemodul zur Erkennung (100) codiert wurde, das durch die Erkennung des Werkzeugbruchs aktiviert wurde.

6. Übertragungsvorrichtung nach Anspruch 4, wobei das Sendemodul zur Erkennung einen Generator oder einen Akkumulator zur Versorgung mit elektrischem Strom umfasst, **dadurch gekennzeichnet, dass** der genannte elektronische Codierer (140) bei der Erkennung einer Strom-Mindestschwelle in dem genannten Generator aktiviert wird.

7. Übertragungsvorrichtung nach Anspruch 4, **dadurch gekennzeichnet, dass** in vorbestimmten Zeitabständen ein Test der Verbindung zwischen dem oder den obengenannten Sendemodulen zur Erkennung (100) und dem Empfangsmodul zur Steuerung (200) durchgeführt wird.

8. Übertragungsvorrichtung nach Anspruch 4, **dadurch gekennzeichnet, dass** das Sendemodul zur Erkennung (100) einen kontaktlosen Sensor (130) mit Hall-Effekt mit Magnetfeld zur Erkennung eines Werkzeugbruchs und zur Aktivierung des mit ihm verbundenen Codierers umfasst.

9. Übertragungsvorrichtung nach Anspruch 4, **dadurch gekennzeichnet, dass** das Sendemodul zur Erkennung (100) einen magnetischen Kontaktsensor (130) vom ILS-Typ zur Erkennung eines Werkzeugbruchs und zur Aktivierung des mit ihm verbundenen Codierers umfasst.

10. Übertragungsverfahren nach Anspruch 5, **dadurch gekennzeichnet, dass** das binäre Wort, das von jedem Sendemodul zur Erkennung (100) ausgesendet wird, eine bestimmte Anzahl von Informationseinheiten umfasst, von denen mindestens ein Teil für die Ortung der Maschine und mindestens ein anderer Teil für die Ortung des Werkzeugs und des Vielfachkopfs, auf dem es montiert ist, verwendet wird.

11. Übertragungsverfahren nach Anspruch 5, **dadurch gekennzeichnet, dass** die internen Uhren der binären Codierer (140) und Decodierer (240) der obengenannten Sende- (100) und Empfangsmodule (200) aufeinander synchronisiert sind.

12. Übertragungsverfahren nach den Ansprüchen 6 und 10, **dadurch gekennzeichnet, dass** ein Teil der genannten Anzahl von Informationseinheiten, die das übertragene binäre Wort bilden, für die Identifizierung der Ursache der Aussendung verwendet wird.

13. Übertragungsverfahren nach Anspruch 10, **dadurch gekennzeichnet, dass** das obengenannte Empfangsmodul zur Steuerung (200) der Werkzeugmaschine einen Speicher (250) umfasst, in dem alle Codes gespeichert sind, die jeweils den Werkzeugen entsprechen, die auf der genannten Maschine arbeiten, um sie mit den decodierten binären Wörtern zu vergleichen, die von den obengenannten Modulen zur Erkennung (100) empfangen wurden, und auf diese Weise das schadhafte Werkzeug oder den schadhaften Generator zu orten.
